# EUROPÄISCHE PATENTANMELDUNG

(11) **EP 0 586 968 A1**
(43) Veröffentlichungstag der Anmeldung: **16.03.1994**
(21) Anmeldenummer: 93113590.9
(22) Anmeldetag: 25.08.1993
(51) Int. Cl.: B62D 33/06

(54) **Hydraulische Kippvorrichtung des Fahrerhauses eines Lastkraftwagens**

(30) Priorität: 07.09.1992 DE 4229842
(71) Anmelder: WEBER-HYDRAULIK GmbH, D-74361 Güglingen (DE)
(72) Erfinder: Heidler, Jürgen, Dipl.-Ing., D-7120 Bietigheim-Bissingen (DE); Blommer, Horst, D-7129 Pfaffenhofen (DE); Wider, Manfred, D-7129 Pfaffenhofen (DE)
(74) Vertreter: Säger, Manfred, Dipl.-Ing.

(57) **Zusammenfassung**

Die zum Kippen des Fahrerhauses eines Lastkraftwagens dienende hydraulische Kippvorrichtung kann in eine gekippte Montagestellung und in eine Fahrstellung zurückgekippt werden. Sie weist eine Pumpe, mit einem Druckmittelbehälter, einem doppelwirkenden Hubzylinder, dessen Kolben und Zylindergehäuse jeweils mit dem Fahrerhaus bzw. dem Fahrgestell des Lastkraftwagens verbunden sind, mit einem Steuerventil, durch das die beiden durch den Kolben getrennten Zylinderräume des Hubzylinders über Druckmittelleitungen wahlweise an die Pumpe oder an den Druckmittelbehälter anschließbar sind, wobei die beiden Zylinderräume im Bereich der der Fahrstellung entsprechenden Lage des Kolbens über eine Verbindungsleitung miteinander verbunden sind, deren Mündungen den Bereich des Spiels des Kolbens in der Fahrstellung definieren, und wobei der kolbenseitige Zylinderraum über eine zu diesem hin öffnende in der ersten Druckmittelleitung eingeschaltete, von der zweiten Druckmittelleitung über eine Drucksteuerleitung druckgesteuerte erste Ventileinrichtung mit dem Steuerventil verbunden ist, auf. Ferner weist die hydraulische Kippvorrichtung eine erste Ventileinrichtung die als Zweiwege-Zweipositions-Ventil ausgebildet ist, auf, welches in Schließrichtung mit der Kraft einer Feder beaufschlagt ist und neben der Drucksteuereinrichtung zwei weitere Drucksteuereinrichtungen zum Öffnen und eine weitere Drucksteuereinrichtung zum Schließen aufweist, wobei die erste Drucksteuereinrichtung mit dem Abschnitt der ersten Druckmittelleitung zwischen der ersten Ventileinrichtung und dem Steuerventil verbunden ist und die zweite Drucksteuereinrichtung mit dem Abschnitt der ersten Druckmittelleitung zwischen der ersten Drucksteuereinrichtung mit dem Zweig der Verbindungsleitung zum kolbenstangenseitigen Zylinderraum verbunden ist.

## Beschreibung

Die vorliegende Erfindung betrifft eine hydraulische Kippvorrichtung des Fahrerhauses eines Lastkraftwagens gemäß dem Oberbegriff des Hauptanspruches.

Eine solche gattungsgemäße hydraulische Vorrichtung gemäß dem Oberbegriff des Hauptanspruchs ist bekannt (DE-29 45 585 C2). Diese Kippvorrichtung löst zwar das Problem, die Baugröße und das Gewicht bei gleichzeitig gleicher Leistungsfähigkeit zu verringern, es treten jedoch beim Überfahren der Umlaufverbindung zwischen oberem und unterem Zylinderraum Kraftsprünge auf, da hierbei die Kraft des Fahrerhauses nicht mehr durch die untere Fläche des Kolbens gehalten wird, sondern nur noch von der Differenzfläche, die dem Querschnitt der Kolbenstange entspricht. Dadurch fällt das Fahrerhaus beim Absenken sehr stark ins Schloß, was unerwünscht ist.

Aufgabe der vorliegenden Erfindung ist es, eine Kippvorrichtung zu schaffen, die diesen Kraftsprung vermeidet.

Gelöst wird diese Aufgabe bei einer gattungsgemäßen Kippvorrichtung durch die kennzeichnenden Merkmale des Hauptanspruches. Die Unteransprüche geben bevorzugte Ausführungsformen der Erfindung wieder.

Erfindungsgemäß ist die Ventileinrichtung in der ersten Druckmittelleitung, die zum kolbenseitigen Zylinderraum des Hubzylinders führt, also zum Anheben der Fahrerkabine dient, nicht mehr als Rückschlagventil ausgebildet, sondern als Zweiwege-Zweipositionsventil, welches in Schließrichtung mit der Kraft einer Feder beaufschlagt ist. Neben der bereits aus dem Stand der Technik bekannten Drucksteuereinrichtung, die mit der zweiten Druckmittelleitung in Verbindung steht, die mit dem kolbenstangenseitigen Zylinderraum des Hubzylinders verbunden ist, und beim Absenken der Fahrerkabine die Rücklaufleitung öffnet, weist das erfindungsgemäße Zweiwege-Zweipositionsventil zwei weitere Drucksteuereinrichtungen zum Öffnen und eine weitere Drucksteuereinrichtung zum Schließen auf. Dabei ist die erste Drucksteuereinrichtung mit dem Abschnitt der ersten Druckmittelleitung zwischen der ersten Ventileinrichtung und dem Steuerventil verbunden, während die zweite Drucksteuereinrichtung mit dem Abschnitt der ersten Druckmittelleitung zwischen der ersten Ventileinrichtung und dem Zylinderraum und die dritte Drucksteuereinrichtung mit dem Zweig der Verbindungsleitung zum kolbenstangenseitigen Zylinderraum verbunden ist. Diese Drucksteuereinrichtungen bewirken, daß beim Anheben der Fahrerkabine das Zweiwege-Zweipositionsventil über die erste Drucksteuereinrichtung geöffnet wird, während beim Absenken der Fahrerkabine das gleiche Ventil über die aus dem Stand der Technik bekannte Drucksteuerleitung geöffnet wird, die mit der zweiten Druckmittelleitung verbunden ist. Beim Überfahren der Umlaufverbindung zwischen dem kolbenseitigen und dem kolbenstangenseitigen Zylinderraum, bei dem sich ein kurzzeitiger Druckabfall im kolbenstangenseitigen Zylinderraum einstellt, sperrt die zweite Ventileinrichtung in der Verbindungsleitung, während das Zweiwege-Zweipositionsventil geöffnet bleibt, so daß kein Kraftsprung auftreten kann.

Dabei ist die erste Drucksteuereinrichtung zum Betätigen des Zweiwege-Zweipositionsventils mit dem Abschnitt der ersten Druckmittelleitung zwischen der ersten Ventileinrichtung und dem Steuerventil verbunden, während die zweite Drucksteuereinrichtung mit dem Abschnitt der ersten Druckmittelleitung zwischen der ersten Ventileinrichtung und dem kolbenseitigen Zylinderraum und die dritte Drucksteuereinrichtung mit dem Zweig der Verbindungsleitung zum kolbenstangenseitigen Zylinderraum verbunden ist.

Vorteilhafterweise ist in der zweiten Druckmittelleitung ein zu der Pumpe hin öffnendes zweites Rückschlagventil angeordnet, dem ein zweites weiteres Rückschlagventil antiparallel als Nachsaugesperrventil zugeschaltet sein kann. Das zweite weitere Rückschlagventil kann druckabhängig ausgebildet sein. Auch in der ersten Druckmittelleitung kann ein zum unteren Zylinderraum hin sperrendes erste Rückschlagventil vorgesehen sein, zu dem ein erstes weiteres Rückschlagventil antiparallel als Nachsaugesperrventil geschaltet sein kann. Die beiden als Nachsaugesperrventile geschalteten weiteren Rückschlagventile öffnen vorzugsweise bei einem Überdruck des Druckmittels von ca. 1 bar.

Weiterhin können sowohl in der ersten Druckmittelleitung als auch in der zweiten Druckmittelleitung Blenden vorgesehen sein.

Sowohl das erste Rückschlagventil und das erste weitere Rückschlagventil als auch das zweite Rückschlagventil und das zweite weitere Rückschlagventil können, gegebenenfalls gemeinsam mit den Blenden als gemeinsames Bauteil ausgebildet sein. Dabei besteht der Ventilmechanismus vorzugsweise aus einem in einem Gehäuse verschiebbaren Schieber mit dichtenden Führungsflächen am Gehäuse, die einen Teil der Umfangsfläche des Schiebers unter Bildung zweier voneinander getrennter Kammern, die begrenzt werden vom Gehäuse und dem Schieber, abdichten, mit zwei Kanälen im Schieber, deren freie Enden in unterschiedlichen Kammern münden, und deren andere Enden an dem Umfangsbereich des Schiebers münden, welche in der neutralen Schließstellung im Bereich der dichtenden Führungsflächen und in von der neutralen Schließstellung im Bereich außerhalb der dichtenden Führungsflächen verschobenen Stellung im Bereich einer der beiden Kammern liegt. Der Schieber kann in beiden Bewegungsrichtungen federbeaufschlagt sein. Eine solche Anordnung des Nachsaugesperrventils ist in der Anmeldung beschrieben. Das Zweiwege-Zweipositionsventil kann als Kugel-Schieber-Ventil ausgebildet sein, dessen Kugel von dem Steuerstift eines mit der Steuereinrichtung bzw. Druckmittelleitung hydraulisch verbundenen Kolbens gegen die Schließrichtung beaufschlagt ist und in einem in einem Gehäuse verschiebbaren, durch die Feder in Schließrichtung beaufschlagten Schieber gelagert ist. Das Kugel-Schieber-Ventil kann sowohl mit dem pumpenseitigen Abschnitt der ersten Druckmittelleitung als auch mit dem kolbenseitigen Abschnitt der ersten Druckmittelleitung bzw. dem kolbenseitigen Abschnitt der Verbindungsleitung und dem kolbenstangenseitigen Abschnitt der Verbindungsleitung hydraulisch verbunden sein. Diese Verbindungen wirken als Drucksteuereinrichtungen.

Die zweite Ventileinrichtung kann als Kugelventil ausgebildet sein mit einer Kugel, die von einer Feder in Schließrichtung gegen einen Ventilsitz beaufschlagt ist.

Dabei können sowohl das Zweiwege-Zweipositionsventil als auch das Kugelventil in einem gemeinsamen Gehäuse angeordnet sein, wobei beide Kugeln in einem verschiebbaren Schieber angeordnet sind.

Die Erfindung wird nachfolgend anhand der Figuren in Ausführungsbeispielen näher beschrieben. Hierin zeigt:

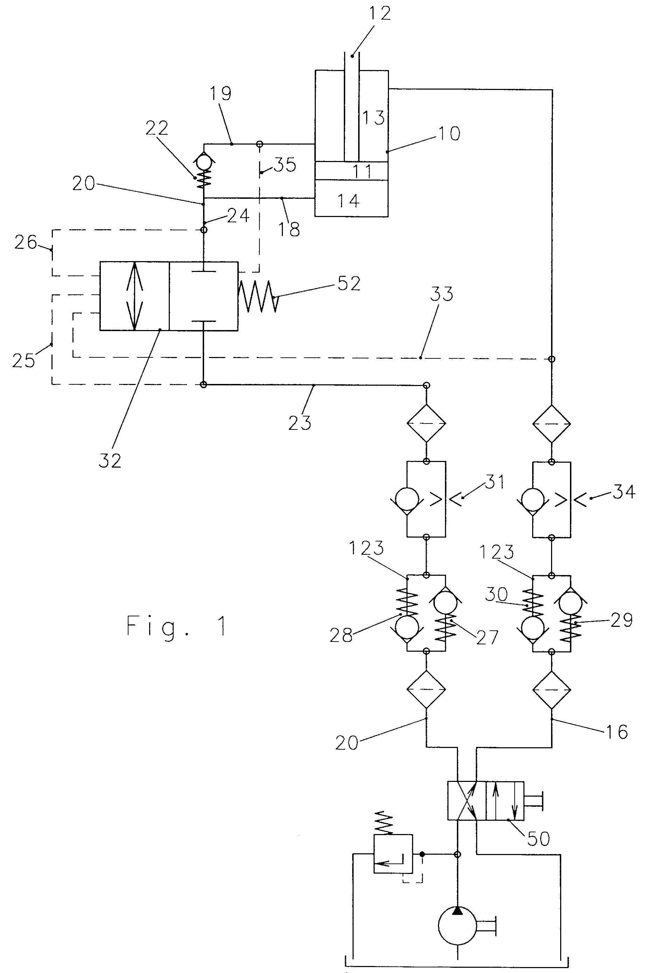

- Figur 1: einen Schaltplan der hydraulischen Kippvorrichtung;
- Figur 2: die Anordnung der Ventileinrichtung und des Hubzylinders;
- Figur 3: einen vergrößerten Ausschnitt aus der Fig. 2 mit den Ventileinrichtungen.

Die hydraulische Kippvorrichtung für Fahrerhäuser von Lastkraftwagen weist einen doppeltwirkenden Hubzylinder (Zylinder) 10 und einem in diesem bewegbar an einer Kolbenstange 12 geführten Kolben 11 auf, der den Zylinder in einen oberen bzw. kolbenstangenseitigen Zylinderraum 13 und einen unteren bzw. kolbenseitigen Zylinderraum 14 trennt. Ferner ist an dem Zylinder 10 an dem kolbenseitigen Zylinderraum eine erste Druckmittelleitung 20 angeschlossen, die mit einem Steuerventil 50 verbunden ist. Am kolbenstangenseitigen Zylinderraum 13 ist eine zweite Druckmittelleitung 16 angeschlossen, die gleichfalls mit dem Steuerventil 50 verbunden ist. Über das Steuerventil 50 kann jede der beiden Druckmittelleitungen 20, 16 jeweils mit einer Pumpe oder dem Druckmittelbehälter verbunden werden. Im Bereich des kolbenseitigen Zylinderraums 14 ist bei nahezu abgesenktem Kolben 11 ein Anschluß eines Zweiges 18 einer Verbindungsleitung 18, 19 angeordnet, die einerseits mit dem kolbenstangenseitigen Zylinderraum 13 und andererseits mit dem kolbenseitigen Zylinderraum 14 verbunden ist. Zwischen den beiden Zweigen 18 und 19 der Verbindungsleitung 18, 19 ist eine zweite Ventileinrichtung 22 angeordnet.

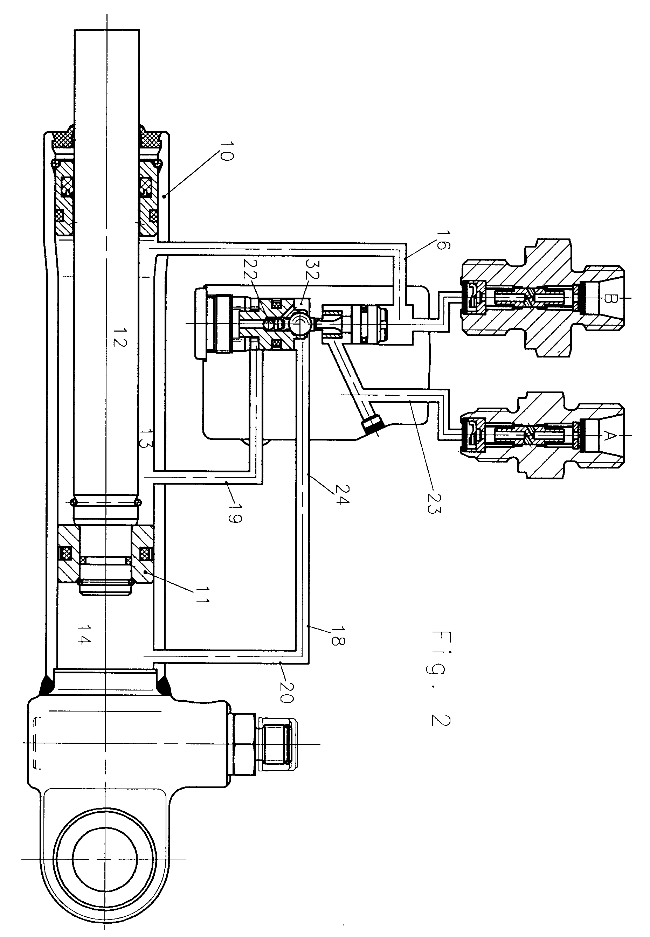

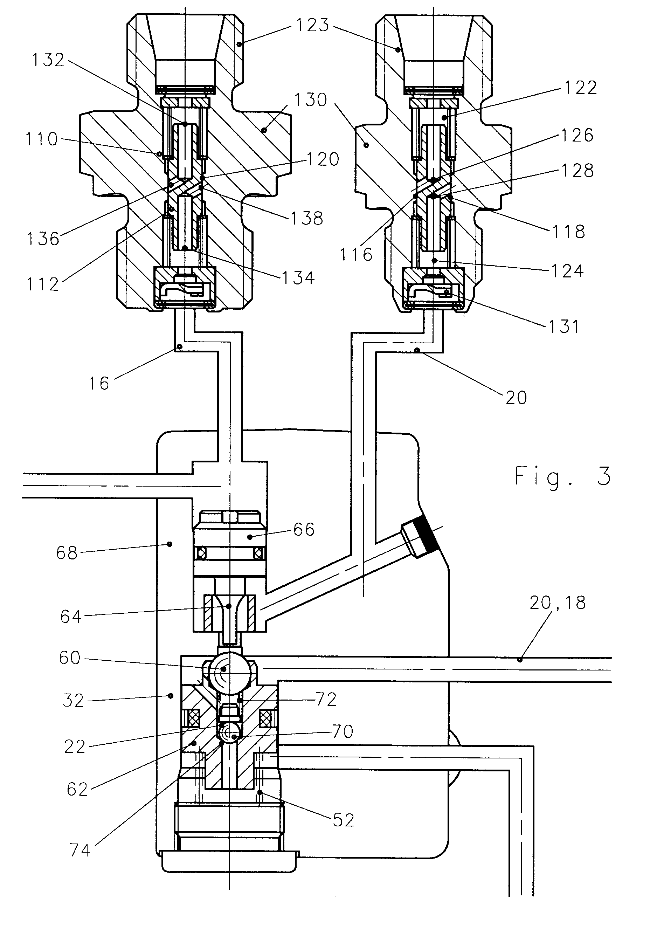

Des weiteren sind in der ersten Druckmittelleitung 20 und in der zweiten Druckmittelleitung 16 als gesonderte Bauteile 123 ausgebildete erste und zweite sowie erste und zweite weitere Rückschlagventile angeordnet, sowie als fest eingestellte Drosseln ausgebildete Blenden 31, 34, die in den Figuren 2 und 3 näher erläutert sind.

In der ersten Druckmittelleitung 20 ist das Zweiwege-Zweipositionsventil 32 angeordnet, das die erste Druckmittelleitung 20 in zwei Abschnitte teilt, einen Abschnitt 23 zwischen der ersten Ventileinrichtung 32 und dem Steuerventil 50 und einen Abschnitt 24 zwischen der ersten Ventileinrichtung 32 und dem Zylinderraum 14.

Die beiden Druckmittelleitungen 20 und 16 sind so an das Steuerventil 50 angeschlossen, daß nur jeweils eine Leitung mit der Pumpe und da andere Leitung mit dem Druckbehälter oder umgekehrt hydraulisch verbunden sind.

In die erste Druckmittelleitung 20 ist ein zum kolbenseitigen Zylinderraum 14 hin sperrendes erstes Rückschlagventil 27 eingeschaltet, zu dem ein erstes weiteres Rückschlagventil 28 antiparallel geschaltetet ist. In der zweiten Druckmittelleitung 16 ist ebenfalls ein zum kolbenstangenseitigen Zylinderraum 13 hin sperrendes zweites Rückschlagventil 29 angeordnet, zu dem ein zweites weiteres Rückschlagventil 30 antiparallel geschaltet ist. Beide Paare von Rückschlagventilen 27, 28 bzw. 29, 30 bilden Nachsaugesperrventile, die beispielsweise in Fig. 2 und 3 als gesonderte Bauteile 123 näher dargestellt sind.

Nach den beiden Rückschlagventilen 27, 28 in der ersten Druckmittelleitung 20 ist die als Drossel ausgebildete erste Blende 31 angeordnet, zwischen der und dem kolbenseitigen Zylinderraum 14 eine Ventileinrichtung 32 als Zweiwege-Zweipositionsventil angeordnet ist, dessen Drucksteuereinrichtung 33 an die zweite Druckmittelleitung 16 zwischen dem kolbenstangenseitigen Zylinderraum 13 und der den beiden zweiten Rückschlagventilen 29, 30 nachgeordneten, als Drossel ausgebildeten zweiten Blenden 34 angeschlossen ist. Außerdem weist die erste Ventileinrichtung 32 noch folgende Drucksteuereinrichtungen auf: Die erste Drucksteuereinrichtung 25, die zwischen Blende 31 und erster Ventileinrichtung 32 mit der ersten Druckmittelleitung 20 verbunden ist, die zweite Drucksteuereinrichtung 26, die zwischen der ersten Ventileinrichtung 32 und dem kolbenseitigen Zylinderraum 14 mit der ersten Druckmittelleitung 20 verbunden ist, sowie eine dritte Drucksteuereinrichtung 35, die mit dem Zweig 19 der Verbindungsleitung 18, 19 zum kolbenstangenseitigen Zylinderraum 13 verbunden ist. Die erste Ventileinrichtung 32 ist durch eine Feder 52 in Sperrichtung federbelastet.

Die erste Ventileinrichtung 32 und die zweite Ventileinrichtung 22 sind in den Fig. 2 und 3 näher dargestellt. Das Ventil 32 ist als Kugel-Schieber-Ventil ausgebildet, dessen Kugel 60 von dem Steuerstift 64 eines mit der Steuereinrichtung 33 bzw. der zweiten Druckmittelleitung 16 hydraulisch verbundenen Kolbens 66 gegen die Schließrichtung beaufschlagt ist, und dessen Kugel in einem in einem Gehäuse 68 verschiebbaren, durch die Feder 52 in Schließrichtung beaufschlagten Schieber 62 gelagert ist. Das Ventil 32 ist sowohl mit dem Abschnitt 23 der Druckmittelleitung 20 als auch mit dem Abschnitt 24 der ersten Druckmittelleitung 20 bzw. dem Zweig 18 der Verbindungsleitung 18, 19 und dem Zweig 19 der Verbindungsleitung 18, 19 hydraulisch verbunden. Dadurch werden die Drucksteuereinrichtungen 25 und 26 gebildet.

Die zweite Ventileinrichtung 22 ist als Kugelventil ausgebildet, mit einer Kugel 70, die von einer Feder 72 in Schließrichtung gegen einen Ventilsitz 74 beaufschlagt ist. Das Ventil 32 und das Kugelventil 22 sind in einem gemeinsamen Gehäuse 68 angeordnet, wobei beide Kugeln 60, 70 in dem Schieber 62 angeordnet sind.

Die Nachsaugesperrventile 23 weisen einen Ventilmechanismus 110 in Form eines Schieberventils 112 auf, das einen in einem Gehäuse 130 verschiebbaren Schieber 116 aufweist. Das Ventil hat dichtende Führungsflächen 118 am Gehäuse 130, die einen Teil der Umfangsfläche 120 des Schiebers 116 unter Bildung zweier voneinander getrennter Kammern 122, 124, die begrenzt werden vom Gehäuse 130 und dem Schieber 116, abdichten. Zwei Kanäle 126, 128 im Schieber 116 münden mit ihren freien Enden 132, 134 in unterschiedlichen Kammern 122, 124, und deren andere Enden 136, 138 münden in dem Umfangsbereich des Schiebers 116, welcher in der neutralen Schließstellung Z im Bereich der dichtenden Führungsflächen 118 und in von der neutralen Schließstellung im Bereich außerhalb der dichtenden Führungsflächen 118 verschobenen Stellung im Bereich einer der beiden Kammern 122, 124 liegt. Der Schieber 116 ist in beiden Bewegungsrichtungen federbeaufschlagt.

## Patentansprüche

1. Hydraulische Kippvorrichtung des Fahrerhauses eines Lastkraftwagens in eine gekippte Montagestellung und zum Zurückkippen in die Fahrstellung, mit einer Pumpe, einem Druckmittelbehälter, einem doppeltwirkenden Hubzylinder (10), dessen Kolben (11) und Zylindergehäuse jeweils mit dem Fahrerhaus bwz. dem Fahrgestell des Lastkraftwagens verbunden sind, mit einem Steuerventil (50), durch das die beiden durch den Kolben getrennten Zylinderräume (13, 14) des Hubzylinders über Druckmittelleitungen (20, 16) wahlweise an die Pumpe oder an den Druckmittelbehälter anschließbar sind, wobei die beiden Zylinderräume im Bereich der der Fahrstellung entsprechenden Lage des Kolbens über eine Verbindungsleitung (18, 19) miteinander verbunden sind, deren Mündungen den Bereich des Spiels des Kolbens in der Fahrstellung definieren, und wobei der kolbenseitige Zylinderraum (14) über eine zu diesem hin öffnende in der ersten Druckmittelleitung (20) eingeschaltete, von der zweiten Druckmittelleitung (16) über eine Drucksteuerleitung (33) druckgesteuerte erste Ventileinrichtung (32) mit dem Steuerventil verbunden ist,
mit einer zweiten Ventileinrichtung (22) in der Verbindungsleitung (18, 19), die bei Druckbeaufschlagung über die Verbindungsleitung (19), die mit dem kolbenstangenseitigen Zylinderraum (13) verbunden ist, öffnet und in der Gegenrichtung schließt,
**dadurch gekennzeichnet,** daß
die erste Ventileinrichtung (32) als Zweiwege-Zweipositions-Ventil ausgebildet ist, welches in Schließrichtung mit der Kraft einer Feder (52) beaufschlagt ist, und
neben der Drucksteuereinrichtung (33) zwei weitere Drucksteuereinrichtungen (25, 26) zum Öffnen und eine weitere Drucksteuereinrichtung zum Schließen aufweist, wobei die erste Drucksteuereinrichtung (25) mit dem Abschnitt (23) der ersten Druckmittelleitung (20) zwischen der ersten Ventileinrichtung (32) und dem Steuerventil (50) verbunden ist, und
die zweite Drucksteuereinrichtung (26) mit dem Abschnitt (24) der ersten Druckmittelleitung (20) zwischen der ersten Ventileinrichtung (32) und dem Zylinderraum (14) und die dritte Drucksteuereinrichtung (35) mit dem Zweig (19) der Verbindungsleitung (18, 19) zum kolbenstangenseitigen Zylinderraum (13) verbunden ist.

2. Vorrichtung nach Anspruch 1, dadurch gekennzeichnet, daß in der zweiten Druckmittelleitung (16) ein zu der Pumpe hin öffnendes zweites Rückschlagventil (29) angeordnet ist.

3. Vorrichtung nach Anspruch 2, dadurch gekennzeichnet, daß zu dem zweiten Rückschlagventil (29) ein zweites weiteres Rückschlagventil (30) antiparallel als Nachsaugesperrventil geschaltet ist.

4. Vorrichtung nach Anspruch 3, dadurch gekennzeichnet, daß das zweite weitere Rückschlagventil (30) druckabhängig ausgebildet ist.

5. Vorrichtung nach Anspruch 1, dadurch gekennzeichnet, daß in der ersten Druckmittelleitung (20) ein zum unteren Zylinderraum (14) hin sperrendes erstes Rückschlagventil (27) vorgesehen ist und daß zu diesem ersten Rückschlagventil (27) ein erstes weiteres Rückschlagventil (28) antiparallel als Nachsaugesperrventil geschaltet ist.

6. Vorrichtung nach Anspruch 3 oder 5, dadurch gekennzeichnet, daß die weiteren Rückschlagventile (28 oder 30) bei einem Überdruck des Druckmittels von ca. 1 bar schalten.

7. Vorrichtung nach Anspruch 1, dadurch gekennzeichnet, daß die erste Ventileinrichtung (32) in der ersten Druckmittelleitung (20) zu dem unteren Zylinderraum (14) zwischen diesem und einer ersten Blende (31) angeordnet ist.

8. Vorrichtung nach Anspruch 7, dadurch gekennzeichnet, daß die Drucksteuereinrichtung (33) an die zweite Druckmittelleitung (16) zwischen dem oberen Zylinderraum (13) und einer zwischen diesem und dem zweiten Rückschlagventil (29) angeordneten Blende (34) angeschlossen ist.

9. Vorrichtung nach Anspruch 5, dadurch gekennzeichnet, daß das erste Rückschlagventil (27) und das erste weitere Rückschlagventil (28) als ein Bauteil (123) ausgebildet sind.

10. Vorrichtung nach Anspruch 3, dadurch gekennzeichnet, daß das zweite und das zweite weitere Rückschlagventil (29 bzw. 30) als ein Bauteil ausgebildet ist.

11. Hydraulische Kippvorrichtung nach Anspruch 1, dadurch gekennzeichnet, daß der kolbenseitige Zylinderraum (14) als einzige Zuleitung die erste Druckmittelleitung (20) aufweist, in der die erste Ventileinrichtung (32) angeordnet ist.

12. Vorrichtung nach Anspruch 1, dadurch gekennzeichnet, daß das Zweiwege-Zweipositionsventile (32) als Kugel-Schieber-Ventil ausgebildet ist, dessen Kugel (60) von dem Steuerstift (64) eines mit der Steuereinrichtung (33) bzw. zweiten Druckmittelleitung (16) hydraulisch verbundenen Kolbens (66) gegen die Schließrichtung beaufschlagt ist und
dessen Kugel in einem in einem Gehäuse (68) verschiebbaren durch die Feder (52) in Schließrichtung beaufschlagten Schieber (62) gelagert ist.

13. Vorrichtung nach Anspruch 12, dadurch gekennzeichnet, daß das Ventil (32) sowohl mit dem Abschnitt (23) als auch mit dem Abschnitt (24) der Druckmittelleitung (20) und dem Zweig (19) der Verbindungsleitung (18, 19) hydraulisch in Verbindung steht.

14. Vorrichtung nach Anspruch 1, dadurch gekennzeichnet, daß die zweite Ventileinrichtung (22) als Kugelventil ausgebildet ist, mit einer Kugel (70), die von einer Feder (72) in Schließrichtung gegen einen Ventilsitz (74) beaufschlagt ist.

15. Vorrichtung nach den Ansprüchen 1 und 12 bis 14, dadurch gekennzeichnet, daß das Zweiwege-Zweipositionsventil (32) und das Kugelventil (22) in einem gemeinsamen Gehäuse (68) und beide Kugeln (60, 70) in dem Schieber (62) angeordnet sind.

16. Vorrichtung nach Anspruch 1 bis 5, dadurch gekennzeichnet, daß die Rückschlagventile (29, 30 bzw. 27, 28) gemeinsam mit Blenden (31 bzw. 34) als Nachsaugesperrventile ausgebildet sind, mit einem in zwei entgegengesetzten Richtungen als antiparallel geschaltete Rückschlagventile mit in beiden Richtungen sperrender neutraler Schließstellung wirkendem Ventilmechanismus, wobei der Ventilmechanismus (110) ein Schieberventil (112) aufweist.

17. Vorrichtung nach Anspruch 16, dadurch gekennzeichnet, daß das Schieberventil (112) einen in einem Gehäuse (130) verschiebbaren Schieber (116) aufweist,
mit dichtenden Führungsflächen (118) am Gehäuse (130), die einen Teil der Umfangsfläche (120) des Schiebers (116) unter Bildung zweier voneinander getrennter Kammern (122,124), die begrenzt werden vom Gehäuse (130) und dem Schieber (116), abdichten, mit zwei Kanälen (126, 128) im Schieber (116), deren freie Enden (132, 134) in unterschiedlichen Kammern (122, 124) münden, und deren andere Enden (136, 138) in dem Umfangsbereich des Schiebers (116) münden, welcher in der neutralen Schließstellung (Z) im Bereich der dichtenden Führungsflächen (118) und in von der neutralen Schließstellung in Bereiche außerhalb der dichtenden Führungsfläche (118) verschobenen Stellung im Bereich einer der beiden Kammern (122, 124) liegt.

18. Vorrichtung nach Anspruch 16 und 17, dadurch gekennzeichnet, daß der Schieber (116) in beiden Bewegungsrichtungen federbeaufschlagt ist.
